(19) Europäisches Patentamt
European Patent Office
Office européen des brevets

(11) Veröffentlichungsnummer : **0 255 931 B1**

(12) **EUROPÄISCHE PATENTSCHRIFT**

(45) Veröffentlichungstag der Patentschrift :
**12.07.95 Patentblatt 95/28**

(51) Int. Cl.$^6$ : **H04N 7/30**

(21) Anmeldenummer : **87111205.8**

(22) Anmeldetag : **04.08.87**

(54) **Verfahren zur Übertragung eines Videosignales.**

(30) Priorität : **08.08.86 DE 3626916**

(43) Veröffentlichungstag der Anmeldung :
**17.02.88 Patentblatt 88/07**

(45) Bekanntmachung des Hinweises auf die
Patenterteilung :
**12.07.95 Patentblatt 95/28**

(84) Benannte Vertragsstaaten :
**AT BE CH DE ES FR GB GR IT LI LU NL SE**

(56) Entgegenhaltungen :
**"Einzelbildübertragung mit wachsender Auflösung", 22. Juni 1982, Seiten 143-169, Dissertation von H. LOHSCHELLER (RWTH Aachen)
IEEE TRANSACTIONS ON COMMUNICA-
TIONS, Band COM-33, Nr. 6, June 1985, Seiten
551-557, IEEE, New York, US; N.B. NILL: "A
visual model weigthed cosine transformfor
image compression and quality assessment"**

(73) Patentinhaber : **Deutsche Thomson-Brandt
GmbH
Postfach 1307
D-78003 Villingen-Schwenningen (DE)**

(72) Erfinder : **Keesen, Heinz-Werner, Dr.-Ing.
Tiestestrasse 5
D-3000 Hannover 1 (DE)**
Erfinder : **Hartnack, Wolfgang, Dipl.-Ing.
Saarstrasse 22
D-3005 Hemmingen 5 (DE)**

(74) Vertreter : **Einsel, Robert, Dipl.-Ing.
Deutsche Thomson-Brandt GmbH
Patent- und Lizenzabteilung
Göttinger Chaussee 76
D-30453 Hannover (DE)**

## Beschreibung

Die Erfindung betrifft ein Verfahren zur Übertragung eines Videosignales gemäß dem Oberbegriff des Patentanspruchs 1.

Aus der Dissertationsarbeit an der Fakultät für Elektrotechnik der Rheinisch-Westfählischen Technischen Hochschule Aachen "Einzelbildübertragung mit wachsender Auflösung" von H. Lohscheller vom 22. Juni 1982, ist bekannt (Seite 6), daß durch den Einsatz von Verfahren zur Quellcodierung das Nachrichtenvolumen weitgehend reduziert werden soll, wodurch die Übertragungszeit reduziert wird. Die Quellcodierung erreicht diese Reduktion des Nachrichtenvolumens durch eine Beseitigung der redundanten und irrelevanten Signalanteile.

Eine Wichtung an einigen Stellen in Rechenwerken kann zu einer augenphysiologisch angepaßten Datenreduktion führen. Die Wichtung kann dadurch erreicht werden, daß nach einer Transformation und/oder Rücktransformation die Ergebnismatrizen mit einer Wichtungsfunktion in weiteren Rechenwerken multipliziert werden. Die Wichtungsfunktion besteht im einfachsten Fall aus einer Konstantanten und kann in waagerechter und/oder senkrechter Richtung unterschiedlich sein, um der Augenphysiologie, dem Bildinhalt und/oder dem zeilenorientierten Fernsehstandard angepasst zu sein.

Eine solche Wichtung ist in z.B. IEEE TRANS. ON COMMUNICATIONS, COM-33, N 6, Juni 1985, seiten 551-557 beschrieben.

Es ist Aufgabe der Erfindung, das Verfahren zur Quellencodierung zu vereinfachen.

Diese Aufgabe wird durch die Merkmale des Patentanspruchs 1 gelöst. Vorteilhafte Weiterbildungen der Erfindung sind in den Unteransprüchen genannt.

Zum besseren Verständnis der Erfindung werden nachstehend Ausführungsbeispiele anhand von Figuren näher erläutert.

Es zeigen

Fig. 1        ein Blockschaltbild eines Nachrichtensystems,

Fig. 2        eine zweidimensionale Transformationsschaltung,

Fig. 3        eine zweidimensionale Rücktransformationsschaltung,

Fig. 4        eine zweidimensionale Transformationsschaltung mit Wichtung,

Fig. 5        eine zweidimensionale Rücktransformationsschaltung mit Wichtung,

Fig. 6        eine zweidimensionale Transformationsschaltung mit integrierter Wichtung,

Fig. 7        eine zweidimensionale Rücktransformationsschaltung mit integrierter Wichtung und

Fig. 8        einen Verfahrensablauf.

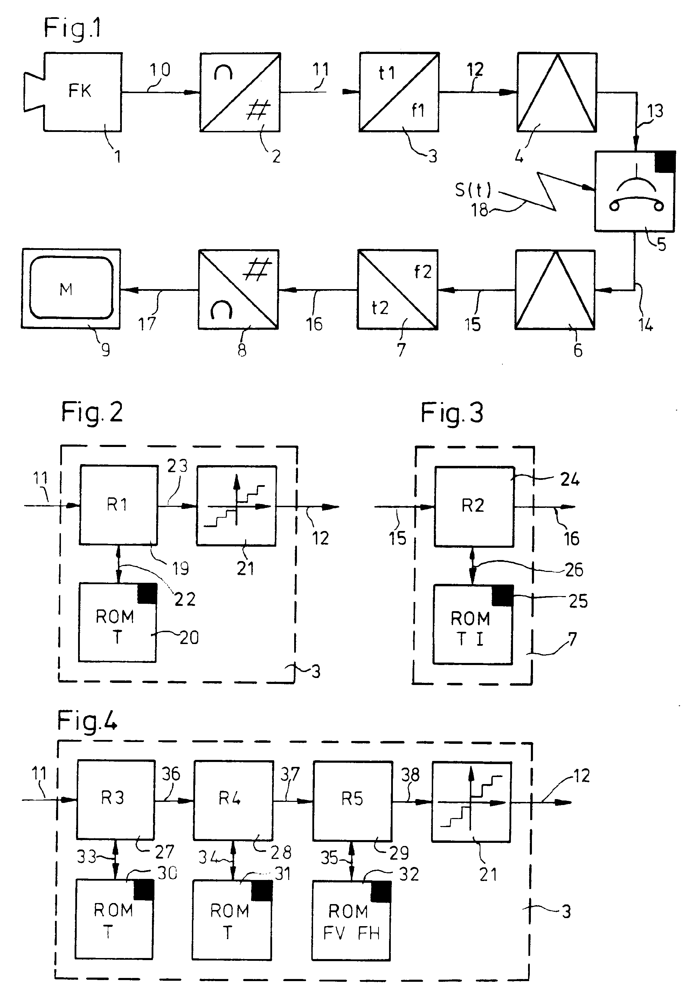

Fig. 1 zeigt ein Blockschaltbild eines allgemeinen Nachrichtenübertragungssystems mit einer Fernsehkamera 1, einem AD-D-Wandler 2, im folgenden ADU (Analog-Digital-Umsetzer) genannt, eine Transformationsschaltung 3, im folgenden Transformator genannt, und einen Modulator 4 auf einer Senderseite, einen Speicher 5 und einen Demodulator 6, eine Rücktransformationsschaltung 7, im folgenden Rücktransformator oder inverser Transformator genannt, einen D/A-Wandler 8, im folgenden DAU (Digital-Analog-Umsetzer) genannt und einen Monitor 9 auf einer Empfängerseite. Zwischen den einzelnen Baugruppen 1 - 9 sind Leitungen 10 - 17 angeordnet. Die Baugruppen 2-8 und 10-17 sind in einem Videorekorder angeordnet. Auf den Magnetbandspeicher 5 wirkt eine Störung S(T) 18 ein. Die Fernsehkamera 1 liefert ein Videosignal über die Leitung 10 zu dem ADU 2. Der ADU 2 setzt die analogen Videosignale in digitalisierte Videosignale um und gibt diese digitalisierten Videosignale zu dem Transformator 3. Der Transformator 3 transformiert die digitalisierten Videosignale aus dem Zeitbereich in einen Spektralbereich, im folgenden Frequenzbereich genannt. Transformieren heißt, daß die digitalisierten Videosignale als Zahlen betrachtet, blockweise als Matrizen angeordnet und matrixweise multipliziert werden. Die digitalisierten Werte im Frequenzbereich werden Spektralkoeffizienten genannt. Die Spektralkoeffizienten gelangen über eine Leitung 12 zum Modulator 4. Der Modulator 4 moduliert die Spektralkoeffizienten und überträgt die modulierten Spektralkoeffizienten über eine Leitung 13 auf einen Magnetspeicher 5. Der Magnetspeicher 5 kann auch durch eine Übertragungsstrecke ersetzt sein. Vom Magnetspeicher 5 gelangen die aufgezeichneten Signale über eine Leitung 14 zu einem Demodulator 6. Der Demodulator 6 demoduliert die Spektralkoeffizienten. Die demodulierten Spektralkoeffizienten werden über eine Leitung 5 zum Rücktransformator 7 weitergegeben. Im Rücktransformator 7 wird die zu dem Transformator 3 inverse Funktion durchgeführt. Die Spektralkoeffizienten werden im Rücktransformator 7 vom Frequenzbereich in den Zeitbereich überführt. Die digitalisierten Videosignale, die sich im Zeitbereich befinden, werden über die Leitung 16 zum ADU 8 gegeben. Im ADU 8 werden die digitalisierten Videosignale in Analogsignale umgesetzt und über eine Leitung 17 zu dem Monitor 9, im folgenden Bildschirm genannt, gegeben. Auf dem Bildschirm 9 werden die Signale, die von der Fernsehkamera 1 aufgenommen sind, sichtbar gemacht. Die rücktransformierten analogen Signale sind nicht unbedingt identisch mit den digitalisierten Signalen auf der Senderseite vor dem Transformator 3, weil im Transformator irrelevante und redundante Anteile der digitalisierten Signale unterdrückt und vor der Übertragung (Speicherung) herausgesiebt sind.

Fig. 2 zeigt das Blockschaltbild einer Transformationsschaltung 3 für ene zweidimensionale Transformation, z.B. eine diskrete Kosinusformation, im folgenden DCT genannt, mit 8*8 Bildpunkten, im folgenden Pixel (engl: Pictures elements) genannt. In einem Rechenwerk 19 werden eine senkrechte und eine waagerechte, also zwei eindimensionale Transformationen zeitlich nacheinander, also seriell, ausgeführt, das ist möglich, weil für jede Transformation jeweils die gleichen Transformationsmatrixkoeffizienten benutzt werden. Die Transformationsmatrixkoeffizienten sind in einem Speicher ROMT 20 abgespeichert. Die Abkürzung ROMT steht für einen read-only-memory Speicher und für Transformation. Zu dem Rechenwerk 19 führen acht Datenleitungen 11. Die ankommenden Daten werden mit den Transformationskoeffizienten aus einem Speicher 20 multipliziert und im Rechenwerk 19 abgespeichert. Nachdem die digitalisierten Bildsignale eines Bildsegmentes bzw. ein Blockes mit 8 x 8 Pixeln eindimensional transformiert sind, werden die transformierten gespeicherten Werte ein zweites mal mit den denselben Transformationskoeffizienten aus dem Speicher 20 multipliziert. Damit ist eine zweidimensionale Transformation durchgeführt. Die Transformationskoeffizienten werden über 8 Datenleitungen 22 von dem Speicher 20 an das Rechenwerk 19 weitergegeben. Zusätzlich zu den 8 Datenleitungen 22 sind noch Steuer- 22 und Adressenleitungen 22 als Steuer- 22 und Adressenbus 22 zum Speicher 20 geführt, da das Rechenwerk 19 den Speicher 20 sowohl die Anforderungs-als auch Quittungssignale und die Adressen für einen Transformationskoeffzienten liefern muß. Von dem Rechenwerk 19 führen 8 Datenleitungen 23 zu einem Quantisierer 21. Der Quantisierer 21 quantisiert die ankommenden Werte, d.h. er ordnet Bereichen von Spektralwerten eine einzelne Zahl zu, damit ist eine erste Wichtung durchgeführt. Durch die Quantisierung in Quantisierer 21 werden kleine, vornehmlich höherfrequente, vom Auge nicht wahrnehmbare, Spektralanteile zu null gesetzt. Weil ihr Wert dann nicht übertragen werden muß, ergibt sich eine Datenreduktion. Die einzelne Zahl wird über 8 Datenleitungen 12 zum Demodulator 4 weitergegeben. Das Rechenwerk 19 arbeitet nach folgenden Gleichungen:

$$-QE- = -T- * -E- * -T- ,$$

Dabei bedeuten:

-QE-   Matrix von transformierten digitalisierten Videosignalen der Quellenbildpunkte am Quantisierereingang,

-T-   Transformationsmatrix, z.B. DCT, mit Transformationskoeffizienten und

-E-   Matrix von digitalisierten Videosignale der Quellenbildpunkte, z.B. der 8*8 Pixel.

Die mit gewichteten Transformationskoeffizienten erzeugten Spektralwerte werden quantisiert, um eine Datenreduktion zu erreichen.

Fig. 3 zeigt den auf der Empfängerseite angeordneten inversen Transformator 7. Die demodulierten digitalen Signale gelangen vom Demodulator 6 über die Leitung 15 zum Rechenwerk 24. Das Rechenwerk 24 führt die zum Transformator 3 inversen Funktionen durch. Dabei greift das Rechenwerk 24 über enen Daten-, Adressen- und Steuerbus 26 auf einen Speicher ROMTI (Random only Memory Transformation invers) 25 zu. Das Rechenwerk 24 führt zweimal eine Rücktransformation (Rück = invers) durch. Nach der Rücktransformation werden die rücktransformierten digitalen Signale über einen Datenbus 16 mit acht Leitungen zum DAU 8 weitergegeben. Im Rechenwerk 24 ist noch ein Speicher vorhanden, der die Spektralkoeffizienten nach einer ersten Rücktransformation abspeichert und dann eine zweite (Rück-) Transformation durchführt und danach erst die rücktransformierten Signale über den Datenbus 16 ausgibt. Dazu werden zweimal die gleichen Rücktransformationskoeffizienten benutzt, die im Speicher 25 abgespeichert sind. Eine erste Transformation kann eine senkrechte, eine zweite Transformation kann eine waagerechte Transformation sein. Das Rechenwerk 24 arbeitet nach folgender Gleichung:

$$-A- = -Ti- * -KA- * -Ti- .$$

Dabei bedeuten

-A-   Matrix von rücktransformierten digitalen Bildsignalen der Quellenbildpunkte,

-Ti-   Rücktransformationsmatrix und

-KA-   Matrix von transformierten Bildsignalen der Quellenbildpunkte am Kanalausgang, z.B -QE-, die vom Magnetspeicher 5 kommen und vom Demodulator 6 demoduliert sind.

Fig. 4 zeigt einen Transformator 3, der eine Transformation schneller durchführt. Dazu sind 2 Rechenwerke 27 und 28 vorgesehen, die zwei eindimensionle Transformationen seriell durchführen. Dabei braucht in keinem der Rechenwerke ein Speicher vorhanden sein, natürlich müssen Werte zwischengebuffert (gepuffert) werden. Über den Datenbus 11 mit acht Leitungen werden 8 Bit parallel an das Rechenwerk 27 geliefert. Vom Speicher 30 werden Transformationskoeffizienten über den Datenbus 33 an das Rechenwerk 27 geliefert. Die Leitungen 33 weisen zusätzliche Steuer- und Adressleitungen auf, die eine Anforderung vom Rechenwerk an den Speicher bekanntgeben. Im Rechenwerk 27 werden die digtalisierten Videosignale mit Hilfe von Transformationsgleichungen multipliziert und über den Datenbus 36 zum Rechenwerk 28 weitergegeben. Am Eingang des Rechenwerkes 28 stehen Spektralkoeffizienten an, die eine eindimensionale Transformation aufweisen. Das Rechenwerk 28 erhält Transformationskoeffizienten vom Speicher 31 über Daten-, Steuer- und Adressleitungen 34. Die Daten kommen über eine Datenleitung 34, die Steuer- und Adressignale werden über Steuer- 34 und Adressleitungen 34 gegeben. Die Speicher 30 und 31 können gleiche Spektralkoeffizienten aufweisen. Das ist aber nicht unbedingt notwendig. Es sind zwei Rechenwerke 27 und 28 vorgesehen, um die Transformation schneller durchführen zu können. Nach den beiden Transformationen werden die zweidimensionalen Spektralkoeffizienten über den Datenbus 37 mit 8 Datenleitungen an das Rechenwerk 29 weitergegeben. Eine zweite Wichtung an bestimmten Stellen des Rechenwerkes kann zu einer augenphysiologisch angepaßten Datenreduktion führen. Die zweite Wichtung kann dadurch erreicht werden, daß nach der Transformation bzw. der Rücktransformation die Ergebnismatrix mit einer Wichtungsfunktion FVFH, die in ROMS gespeichert ist, in den Rechenwerken multipliziert wird. Die Funktion der zweiten Wichtung kann in waagerechter und senkrechter Richtung unterschiedlich sein, um sie der Augenphysiologie und/oder dem Bildinhalt und/oder dem zeilenorientieren Fernsehstandard anzupassen. Dementsprechend werden neben den ROMS für die Transformationskoeffizienten zusätzliche ROMS für die Funktion der zweiten Wichtung, die in einem zusätzlichen Multiplizierer durchgeführt werden, benötigt. Die auf den Datenleitungen 37 anstehenden zweidimensionalen Spektralkoeffizienten werden im Rechenwerk 29 zum zweitenmal gewichtet. Dazu wird vom Rechenwerk 29 ein Speicher 32 angesteuert, der Wichtungskoeffizienten an das Rechenwerk 29 abgibt, womit die zweidimensionalen Spektralkoeffizienten beaufschlagt, bewertet und/oder multipliziert werden. Über den Datenbus 38 mit acht Datenleitungen werden acht Bit parallel an den Quantisierer 21 weitergegeben. Dort werden die digitalisierten zweidimensionalen mit einem Wichtungsfaktor beaufschlagten Spektralkoeffizienten quantisiert (entspricht der ersten Wichtung) und über die acht Bit parallele Datenleitung 12 auf den Demodulator gegeben.

-R3A- = -T1- * -E- ,
-R- = -R3A- * -T2- und

```
       -FS(1)  0  0  0  0  0  0    0   -        -FW(1)  0  0  0  0  0  0    0   -
       -   0   -  0  0  0  0  0    0   -        -   0   -  0  0  0  0  0    0   -
       -   0   0  -  0  0  0  0    0   -        -   0   0  -  0  0  0  0    0   -
-Q1-=- -   0   0  0  -  0  0  0    0  -*-R-*-   -   0   0  0  -  0  0  0    0   -
       -   0   0  0  0  -  0  0    0   -        -   0   0  0  0  -  0  0    0   -
       -   0   0  0  0  0  -  0    0   -        -   0   0  0  0  0  -  0    0   -
       -   0   0  0  0  0  0  -    0   -        -   0   0  0  0  0  0  -    0   -
       -   0   0  0  0  0  0  0  FS(d) -        -   0   0  0  0  0  0  0  FW(d) -
```

Dabei bedeuten:

d      Anzahl der Bildpunkte der Bildpunkt-Matrix in waagerechter oder senkrechter Richtung,

FW(i),     i = 1....d, Wichtungsfunktion für eine waagerechte Richtung

FS(i),     i = 1....d, Wichtungsfunktion für eine senkrechte Richtung,

-R3A-     Spektralkoeffizientenmatrix am Ausgang des Rechenwerkes 27,

-R-     Spektralkoeffizientenmatrix am Ausgang des Rechenwerkes 28,

-Q1-     Spektralkoeffizientenmatrix am Ausgang des Rechenwerkes 29 und am Eingang des Quantisierers 21,

-T1-     Transformationskoeffizientenmatrix in dem Speicher 30,

-T2-     Transformationskoeffizientenmatrix in dem Speicher 31,

Die Gleichung für -Q1- gibt eine zweifache Transformation (zweifache Multiplikation von Matrizen) wieder, das ist mathematisch auch richtig. Diese zweifache Transformation ist im Rechenwerk 29 realisiert, weil die Wichtungskoeffizienten (0, FS(1) ,..., FS(d), FW(1) ,.... ,FW(d)) beider Matrizen bereits miteinander multipliziert in dem Speicher 32 abgelegt sind. Es wird eine Transformation (Matrizenmultiplikation) durchgeführt.

Die Spektralwerte auf der Senderseite werden mit einer Wichtungsfunktion gewichtet, das heißt, mit einem Faktor kleiner als 1 multipliziert. Empfängerseitig sind der Senderseite entsprechende Wichtungsfaktoren reziprok. Die Wichtungsfaktoren sind in der o.a. Dissertationsarbeit angegeben.

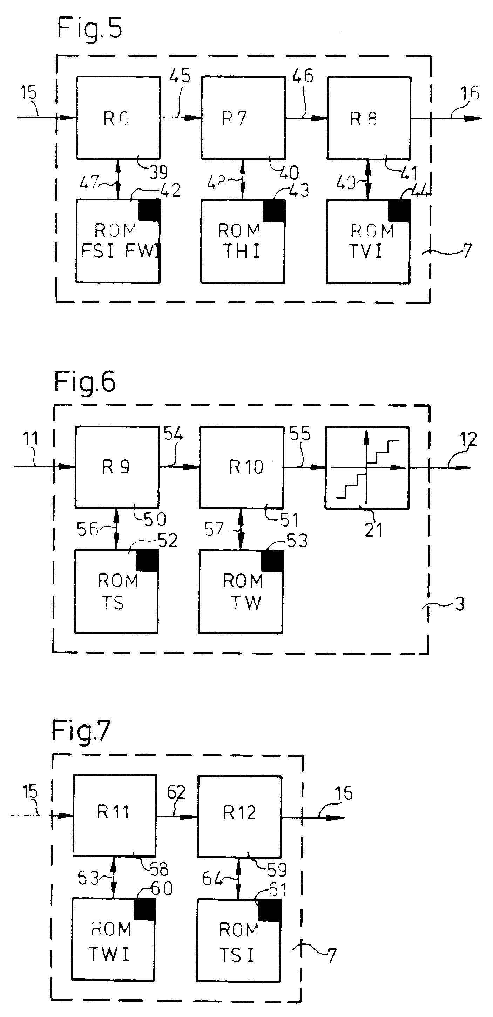

Fig. 5 zeigt ein Blockschaltbild eines Rücktransformators 7, der entsprechend der zweiten Wichtungsfunktionen auf der Senderseite diesen zweiten Wichtungsfunktionen entgegensteuert. Dazu werden über die acht Bit parallelen Datenleitungen 15 die gewichteten Spektralkoeffizienten dem Rechenwerk 39 zugeführt, das über eine Daten-, Adress- und Steuerleitung 47 aus dem Speicher 42 die dritten Wichtungsfaktoren holt und sie mit den Spektralkoeffizienten multipliziert. Die dritten Wichtungsfaktoren sind reziprok den zweiten Wichtungsfaktoren auf der Senderseite. Vom Rechenwerk 39 werden über einen acht Bit parallelen Datenbus 45 die Daten zum Rechenwerk 40 weitergereicht, wo eine inverse Transformation der Spektralkoeffizienten stattfindet. Die Rücktransformationskoeffizienten werden aus dem Speicher 43 geholt, der mit dem Rechenwerk 40 über einen Daten-, Steuer- und Adressbus 48 mit dem Rechenwerk 40 verbunden ist. Die eindimensional rücktransformierten Spektralkoeffizienten werden zur nächsten eindimensionalen Transformation über die Datenleitung 46 mit acht Bit auf das Rechenwerk 41 gegeben, wo die zweite eindimensionale Rücktransformation stattfindet. Dazu werden Rücktransformationskoeffizienten über die Steuer- und Adressleitung 49 an das Rechenwerk 41 abgegeben. Auf der Leitung 16 stehen dann die rücktransformierten digitalisierten Videosignale an.

-R6A- = -T3- * -E- ,

-Z- = -R6A- * -T4- und

$$-Q2-=- \begin{bmatrix} FSi(1) & 0 & 0 & 0 & 0 & 0 & 0 & & 0 \\ & 0 & - & 0 & 0 & 0 & 0 & 0 & 0 \\ & 0 & 0 & - & 0 & 0 & 0 & 0 & 0 \\ & 0 & 0 & 0 & - & 0 & 0 & 0 & 0 \\ & 0 & 0 & 0 & 0 & - & 0 & 0 & 0 \\ & 0 & 0 & 0 & 0 & 0 & - & 0 & 0 \\ & 0 & 0 & 0 & 0 & 0 & 0 & - & 0 \\ & 0 & 0 & 0 & 0 & 0 & 0 & 0 & FSi(d) \end{bmatrix} *-Z-*- \begin{bmatrix} FWi(1) & 0 & 0 & 0 & 0 & 0 & 0 & & 0 \\ & 0 & - & 0 & 0 & 0 & 0 & 0 & 0 \\ & 0 & 0 & - & 0 & 0 & 0 & 0 & 0 \\ & 0 & 0 & 0 & - & 0 & 0 & 0 & 0 \\ & 0 & 0 & 0 & 0 & - & 0 & 0 & 0 \\ & 0 & 0 & 0 & 0 & 0 & - & 0 & 0 \\ & 0 & 0 & 0 & 0 & 0 & 0 & - & 0 \\ & 0 & 0 & 0 & 0 & 0 & 0 & 0 & FWi(d) \end{bmatrix}$$

Dabei bedeuten:

| | |
|---|---|
| d | Anzahl der Bildpunkte der Bildpunkt-Matrix in waagerechter oder senkrechter Richtung, |
| FWi(i), | i = 1....d,inverse Wichtungsfunktion für eine waagerechte Richtung |
| FSi(i), | i = 1....d,inverse Wichtungsfunktion für eine senkrechte Richtung, |
| -R6A- | Spektralkoeffizientenmatrix am Ausgang des Rechenwerkes 39, |
| -Z- | Spektralkoeffizientenmatrix am Ausgang des Rechenwerkes 40, |
| -Q2- | Spektralkoeffizientenmatrix am Ausgang des Rechenwerkes 41, |
| -T3- | Transformationskoeffizienten in dem Speicher 42, |
| -T4- | Transformationskoeffizienten in dem Speicher 43, |

Fig. 6 zeigt das Blockschaltbild eines schnellen und hardwaremäßig einfach aufgebauten Transformators 3. Dazu werden die beiden eindimensionalen Transformationen seriell ausgeführt und in den beiden Speichern 52 und 53 sind die Wichtungsfaktoren bereits einbezogen, so daß ein zusätzlicher Speicher entfällt. Es werden also nicht Spektralkoeffizienten, sondern Transformationskoeffizienten gewichtet. Über den Datenbus 11 mit acht Datenleitungen werden digitalisierte Videosignale zum Rechenwerk 50 gegeben. Das Rechenwerk 50 holt über den Datenbus des Steuer-, Adress- und Datenbusses 56 die zugehörigen gewichteten Transformationskoeffizienten aus dem Speicher 52. Die Werte aus den digitalisierten Videosignalen werden mit den gewichteten Transformationskoeffizienten im Rechenwerk 50 multipliziert und über den Datenbus 54 zum Rechenwerk 51 weitergegeben. Das Rechenwerk 51 holt sich zur zweiten eindimensionalen Transformation die zugehörigen gewichteten Transformationskoeffizienten aus dem Speicher 53, wobei das Holen über die Daten-, Adress- und Steuerleitungen des Daten-, Adress- und Steuerbusses 57 geschieht. Im Rechenwerk 51 wird die zweite eindimensionale Transformation ausgeführt und über den Datenbus 55, der acht Datenleitungen aufweist, zum Quantisierer 21 gegeben. Nach der Quantisierung werden acht Bit parallel über den Datenbus 12 weitergegeben. In den Speichern 52 und 53 sind in den waagerechten bzw. senkrechten Transformationskoeffizienten die Wichtungskoeffizienten eingearbeitet.

Für die erfindungsgemäße Schaltung ergibt sich dann:

-R9A- = -TS- * -E-

-QE- = -R9A- * -TW-

Dabei bedeuten:

| | |
|---|---|
| -R9A- | eindimensionale Spektralkoeffizientenmatrix am Ausgang des Rechenwerkes 50, |
| -TS- | gewichtete Transformationskoeffizientenmatrix für die senkrechte Richtung im Speicher 52, |
| -E- | digitalisierte Bildsignale in Matrizenform, |
| -QE- | zweidimensionale Spektralkoeffizientenmatrix am Ausgang des Rechenwerkes 51, |
| -TW- | gewichtete Transformationskoeffizientenmatrix für die waagerechte Richtung im Speicher 53. |

Fig. 7 zeigt das Blockschaltbild des Rücktransformators 7, der Rücktransformationsfunktionen durchführt. Der Speicher 60 hat die waagerechten Transformationskoeffizienten mit eingearbeiteten Wichtungskoeffizienten für eine erste eindimensionale Transformation und der Speicher 61 die senkrechten Transformationskoeffizienten mit eingearbeiteten Wichtungskoeffizienten für eine zweite eindimensionale Transformation abgespeichert. Über den Datenbus 15 werden acht Bit parallel zum Rechenwerk 58 gegeben, der die zugehörigen Transformationskoeffizienten über den Steuer-, Daten- und Adressbus 63 holt und diese mit den über den Datenbus 15 ankommenden Daten multipliziert. Über den Datenbus 62 werden acht Bit parallel über acht Datenleitungen zum Rechenwerk 59 gegeben. Die zugehörigen Transformationskoeffizienten, die einmal aus den senkrechten Transformationskoeffizienten und den in diesen eingearbeiteten senkrechten Wichtungskoeffizienten bestehen, werden über den Daten-, Steuer- und Adressbus 64 koeffizienten und eindimensional transformierte Spektralkoeffizienten zum zweitenmal eindimensional transformiert und das Ergebnis wird über den Datenbus 16 auf acht Datenleitungen zum DAU 8 weitergegeben.

Für die erfindungsgemäße Schaltung ergibt sich dann:

-R11A- = -TWI- * -KA-

-A1- = -R11A- * -TSI-

Dabei bedeuten:

-R11A- eindimensionale Spektralkoeffizientenmatrix am Ausgang des Rechenwerkes 58,

-TWI- gewichtete Rücktransformationskoeffizientenmatrix für die senkrechte Richtung im Speicher 60,

-KA- zweidimensionale Spektralkoeffizientenmatrix am Eingang des Rechenwerkes 58, am Ausgang des Magnetspeichers 5 oder bei der Übertragung am Kanalausgang (KA),

-A1- digitalisierte Bildsignale in Matrizenform,

-TSI- gewichtete Rücktransformationskoeffizientenmatrix für die waagerechte Richtung im Speicher 61.

Wenn die Datenrate so hoch ist, daß die Daten nicht seriell multipliziert werden können, müssen z.B. d oder d * d Multiplizierer (d = Anzahl der Bildpunkte der Bildpunkt-Matrix in waagerechter oder senkrechter Richtung) parallel geschaltet werden. Insgesamt werden dann also bis zu 2 * d * d Multiplizierer zusätzlich benötigt.

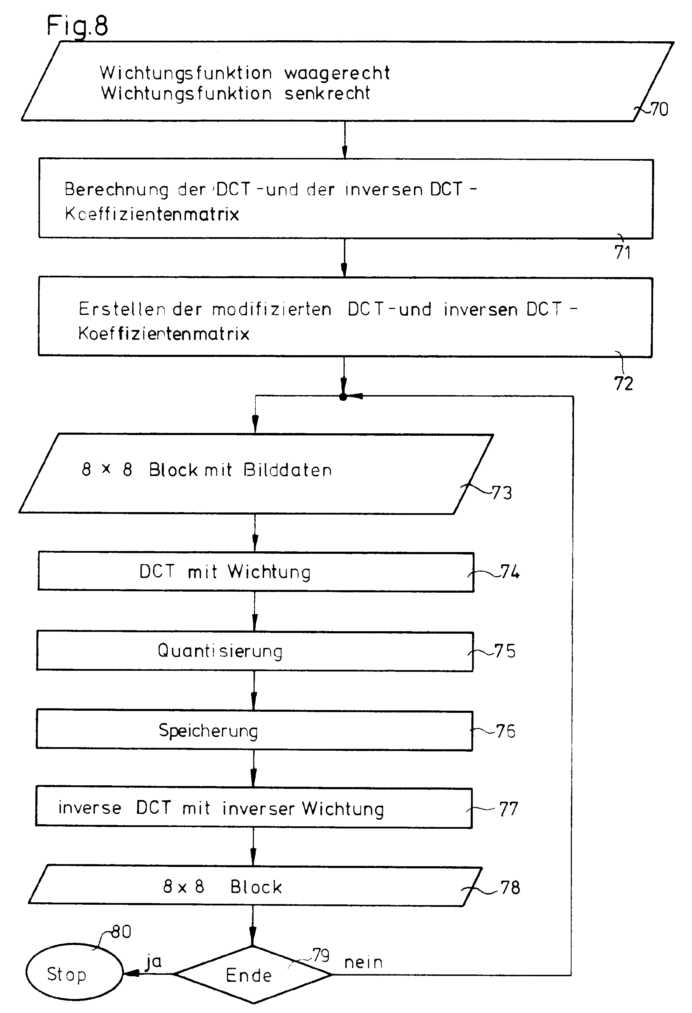

Die soweit beschriebene Schaltung wirkt wie folgt: Fig. 8 zeigt einen Verfahrensablauf mit Verfahrensschritten 70-80. Dabei werden in einem ersten Verfahrensschritt 70 waagerechte und senkrechte Wichtungsfunktionen eingegeben. Die Wichtungsfunktionen sind im einfachsten Fall ein konstanter Faktor. In einem zweiten Verfahrensschritt 71 wird eine DCT-und eine inverse DCT-Koeffizientenmatix berechnet. In einem dritten Verfahrensschritt 73 wird eine modifizierte DCT- und die modifizierte inverse DCT-Koeffizientenmatrix erstellt. Dazu werden die Wichtungsfunktion in die DCT- und in die inverse DCT-Koeffizientenmatrix eingearbeitet. Als vierter Verfahrensschritt 73 erfolgt die blockweise Eingabe von digitalisierten Videosignalen, im folgenden Bilddaten genannt, die einem 8*8 Bildpunkte aufweisenden Bildsegment zugeordnet und matrizenförmig aufgebaut sind. Diese Bilddaten werden im Verfahrensschritt 74 mit einer DCT, die gewichtete Transformationskoeffizienten aufweist, in Spektralkoeffizienten transformiert. Im nachfolgenden Verfahrensschritt 75 werden diese erzeugten Spektralkoeffizienten quantisiert. Im Verfahrensschritt 76 werden die quantisierten Spektralkoeffizienten gespeichert. Im Verfahrensschritt 77 werden die gespeicherten Spektralkoeffizienten rücktransformiert, das heißt, sie werden mit der inversen DCT mit inverser Wichtung transformiert. Nach dem Verfahrensschritt 77 erscheint als Verfahrensschritt 78 ein 8*8 Bildpunkte großer Block mit transformierten und rücktransformierten digitalisierten Videosignalen. In einem Verfahrensschritt 79 wird abgefragt, ob alle zu einem Bild, einer Sequenz, einem Videosignal oder einer sonstigen Datenmenge gehörenden Daten berücksichtigt sind. Ist das nicht der Fall, so wird von der Abfrage 79 wieder zum Verfahrensschritt 73 zurückgegangen und dort weitergemacht. Wird im Verfahrensschritt 79 festgestellt, das alle Daten abgearbeitet sind, so wird das Verfahren mit einem Verfahrensschritt 80 beendet.

## Patentansprüche

1. Verfahren zur Übertragung eines Videosignales in Form von digitalen Daten, bei dem das Videosignal vor der Übertragung in einen Spektralbereich transformiert wird, indem Blöcke von Bildpunkten mittels zweier eindimensionaler Transformationen mit einer zwei-dimensionalen Matrix von Transformationskoeffizienten multipliziert werden, und in den Blöcken eine Wichtung zur augenphysiologisch angepaßten Datenreduktion und Quantisierung durchgeführt wird, wobei decoderseitig eine entsprechend inverse Wichtung und Transformation erfolgt, **dadurch gekennzeichnet,** daß coderseitig die Transformationskoeffizienten der zwei-dimensionalen Matrix verschieden gewichtet sind, so daß die Transformation und Wichtung durch Multiplikation der Blöcke mit der Matrix gleichzeitig erfolgt und decoderseitig die inverse Transformation und inverse Wichtung der Blöcke durch Multiplikation mit entsprechend gewichteten Invers-Transformationskoeffizienten erfolgt, wobei die Faktoren zur Wichtung kleiner als eins sind.

2. Verfahren nach Anspruch 1, **dadurch gekennzeichnet**, daß die Transformation eine diskrete Cosinus-Transformation und die inverse Transformation eine inverse diskrete Cosinus-Transformation ist.

3. Verfahren nach Anspruch 1 oder 2, **dadurch gekennzeichnet**, daß die Blöcke eine Größe von 8∗8 Bildpunkten bzw. Koeffizienten haben.

4. Verfahren nach einem oder mehreren der Ansprüche 1 bis 3, **dadurch gekennzeichnet**, daß bei der Transformation in der zweiten Dimension anders gewichtete Transformations-Koeffizienten wie für die Transformation in der ersten Dimension bzw. bei der inversen Transformation in der zweiten Dimension entsprechend anders gewichtete inverse Transformations-Koeffizienten wie für die inverse Transformation in der ersten Dimension verwendet werden.

5. Verwendung des Verfahrens nach einem der Ansprüche 1 bis 4 in einem Videorecorder.

## Claims

1. A method for the transmission of a video signal in the form of digitalised data, in which before the transmission the video signal is transformed into a spectral domain, in which blocks of picture points are multiplied with a two-dimensional matrix of transformation coefficients by means of two one-dimensional transformations, and in the blocks there is undertaken a weighting for data reduction adapted to the physiology of the eye and quantisation, wherein at the decoder side there occurs a corresponding inverse weighting and transformation, characterised in that at the coder side the transformation coefficients of the two-dimensional matrix are weighted differently, so that the transformation and weighting by multiplication of the blocks with the matrix occurs simultaneously and at the decoder side the inverse transformation and inverse weighting of the blocks occurs by multiplication with correspondingly weighted inverse transformation coefficients, in which the weighting factors are smaller than one.

2. A method according to claim 1, characterised in that the transformation is a discrete cosine transformation and the inverse transformation is an inverse discrete cosine transformation.

3. A method according to claim 1 or 2, characterised in that the blocks have a size of 8∗8 picture points or coefficients.

4. A method according to one or more of claims 1 to 3, characterised in that during the transformation in the second dimension there are used transformation coefficients which are weighted differently from the transformation in the first direction and/or during the inverse transformation in the second dimension there are used correspondingly differently weighted inverse transformation coefficients from the inverse transformation in the first dimension.

5. Use of a method according to any one of claims 1 to 4 in a video recorder.

## Revendications

1. Procédé de transmission d'un signal vidéo sous forme de données numériques dans lequel le signal vidéo est transformé dans un domaine spectral avant la transmission, des blocs de points d'image étant multipliés avec une matrice bidimensionnelle de coefficients de transformation par deux transformations unidimensionnelles, une pondération pour une réduction des données adaptée à la physiologie de la vision et une quantification étant réalisées dans les blocs, une pondération et une transformation inverses étant réalisées dans le décodeur, **caractérisé en ce que** du côté du codeur, les coefficients de transformation de la matrice bidimensionnelle sont pondérés différemment, de sorte que la transformation et la pondération par multiplication des blocs avec la matrice sont réalisées simultanément et en ce que la transformation et la pondération inverses côté décodeur sont réalisées par multiplication avec des coefficients de transformation inverse pondérés en conséquence, les facteurs de pondération étant inférieurs à 1.

2. Procédé selon la revendication 1, **caractérisé en ce que** la transformation est une transformation cosinus discrète et la transformation inverse une transformation cosinus discrète inverse.

3.  Procédé selon la revendication 1 ou 2, **caractérisé en ce que** les blocs ont une taille de 8∗8 points d'image ou coefficients.

4.  Procédé selon une ou plusieurs des revendications 1 à 3, **caractérisé en ce qu**'on utilise pour la transformation dans la seconde dimension des coefficients de transformation pondérés différemment que pour la transformation dans la première dimension et qu'on utilise pour la transformation inverse dans la seconde dimension des coefficients de transformation inverse pondérés différemment que pour la transformation inverse dans la première dimension.

5.  Utilisation du procédé selon l'une des revendications 1 à 4 dans un magnétoscope.

Fig.1

Fig.2

Fig.3

Fig.4

**Fig.5**

**Fig.6**

**Fig.7**

# Fig.8

Wichtungsfunktion waagerecht
Wichtungsfunktion senkrecht ⌐70

Berechnung der DCT -und der inversen DCT -
Koeffizientenmatrix ⌐71

Erstellen der modifizierten DCT-und inversen DCT -
Koeffizientenmatrix ⌐72

8 × 8 Block mit Bilddaten ⌐73

DCT mit Wichtung ⌐74

Quantisierung ⌐75

Speicherung ⌐76

inverse DCT mit inverser Wichtung ⌐77

8 x 8 Block ⌐78

Stop ⌐80    ja    ⌐79 nein    Ende